# EUROPÄISCHE PATENTANMELDUNG

(11) **EP 2 112 530 A2**
(43) Veröffentlichungstag der Anmeldung: **28.10.2009**
(21) Anmeldenummer: 09005286.1
(22) Anmeldetag: 11.04.2009
(51) Int. Cl.: G01V 11/00, G01V 8/10

(54) **Verfahren zur Detektion von Objekten mittels eines Sensors**

(30) Priorität: 24.04.2008 DE 102008020416
(71) Anmelder: Leuze electronic GmbH + Co. KG, 73277 Owen/Teck (DE)
(72) Erfinder: Argast, Martin, 72584 Hülben (DE)
(74) Vertreter: Ruckh, Rainer Gerhard

(57) **Zusammenfassung**

Die Erfindung betrifft ein Verfahren das zur Detektion von Objekten mittels eines Sensors dient, wobei während eines Arbeitsbetriebs im Sensor eine Auswertung der dort generierten Messwerte zur Generierung eines binären Objektfeststellungssignals erfolgt. Während eines Einlemvorgangs werden Häufigkeitsverteilungen für mittels des Sensors generierte Messwerte ermittelt. Aus den Häufigkeitsverteilungen wird eine Gewichtungsfunktion ermittelt. Jeweils ein Wert der Gewichtungsfunktion wird einem während des auf den Einlemvorgang folgenden Arbeitsbetriebs ermittelten Messwert des Sensors zugewiesen. Ein erster Bereich der Gewichtungsfunktion nimmt Werte an, welche einen ersten Schaltzustand des Objektfeststellungssignals entsprechen und ein zweiter Bereich der Gewichtungsfunktion nimmt Werte an, welche einem zweiten Schaltzustand des Objektfeststellungssignals entsprechen.

## Beschreibung

Die Erfindung betrifft ein Verfahren zur Detektion von Objekten mittels eines Sensors.

Sensoren der in Rede stehenden Art können als optische Sensoren, Ultraschallsensoren oder kapazitive Sensoren ausgebildet sein. Generell bilden derartige Sensoren binär schaltende Einheiten, das heißt mit einem derartigen Sensor wird ein binäres Objektfeststellungssignal mit zwei Schaltzuständen generiert. Das binäre Objektfeststellungssignal weist dabei die Schaltzustände "Objekt erkannt" und "kein Objekt" auf, das heißt mit dem Sensor wird eine Anwesenheitskontrolle von Objekten durchgeführt.

Als Messwerte können mit derartigen Sensoren beispielsweise Intensitätswerte ausgewertet werden. Durch die Generierung eines binären Objektfeststellungssignals in Abhängigkeit derartiger Intensitätswerte können beispielsweise mehrlagige Objekte unterschieden werden. Ein Beispiel hierfür ist die Durchführung einer Doppelbogenkontrolle an Druckmaschinen, die mittels eines optischen, kapazitiven oder Ultraschallsensors durchgeführt werden kann. Das in Abhängigkeit mit diesen Sensoren generierte binäre Objektfeststellungssignal weist zwei Schaltzustände auf, wobei ein erster Schaltzustand die Präsenz eines Doppelbogens angibt, während der zweite Schaltzustand das Fehlen eines Doppelbogens, das heißt die Präsenz eines Einfachbogens angibt.

Insbesondere mit optischen Sensoren oder Ultraschallsensoren können auch als Messwerte Distanzwerte generiert werden. Durch die Generierung eines binären Objektfeststellungssignals in Abhängigkeit von derartigen Distanzwerten kann beispielsweise erkannt werden, ob ein Objekt vor einem Hintergrund vorhanden ist oder nicht.

Generell wird bei derartigen Sensoren das binäre Objektfeststellungssignal durch eine Schwellwertbewertung gewonnen. Im einfachsten Fall können die Messwerte des Sensors mit einem einzigen Schwellwert bewertet werden. Liegt dann der Messwert oberhalb des Schwellwerts, nimmt das Objektfeststellungssignal einen ersten Schaltzustand ein, liegt der Messwert unterhalb des Schwellwerts, nimmt das Objektfeststellungssignal den zweiten Schaltzustand ein.

Nachteilig hierbei ist jedoch, dass bei Messwerten im Bereich des Schwellwerts durch systembedingte Störeinflüsse wie Messwertrauschen das Objektfeststellungssignal keinen sicheren Schaltzustand annimmt, da die Messwerte stochastisch schwankend einmal oberhalb oder unterhalb des Schwellwerts liegen obwohl sich das zu detektierende Objekt gar nicht verändert.

Um derartige Fehlfunktionen auszuschließen, weisen bekannte Sensoren eine Hysteresefunktion auf. Hierzu werden die Messwerte nicht nur mit einem, sondern mit zwei unterschiedlichen Schwellwerten bewertet, wobei der Bereich zwischen den Schwellwerten den sogenannten Hysteresebereich bildet. Dabei liegt der Wert eines ersten Schwellwerts unterhalb des Werts des zweiten Schwellwerts.

Werden Messwerte unterhalb. des ersten Schwellwerts registriert, nimmt das Objektfeststellungssignal einen ersten Schaltzustand ein. Hat sich das Objektfeststellungssignal zuvor im zweiten Schaltzustand befunden, wechselt das Objektfeststellungssignal in den ersten Schaltzustand. Werden Messwerte oberhalb des zweiten Schwellwerts registriert, nimmt das Objektfeststellungssignal einen zweiten Schaltzustand ein. Hat sich das Objektfeststellungssignal zuvor im ersten Schaltzustand befunden, wechselt das Objektfeststellungssignal in den zweiten Schaltzustand. Werden dagegen Messwerte innerhalb des Hysteresebereichs registriert, bleibt das Objektfeststellungssignal unverändert in seinem bisherigen Schaltzustand. Der Hysteresebereich bildet somit einen Totbereich, da Messwerte innerhalb dieses Hysteresebereichs nicht zu einer Änderung des Schaltzustands führen. Der Hysteresebereich führt somit systembedingt zu einer Reduzierung des Auflösungsvermögens, das heißt der Messgenauigkeit des Sensors.

Der Erfindung liegt die Aufgabe zugrunde, einen binär schaltenden Sensor mit erhöhter Messgenauigkeit bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Verfahren dient zur Detektion von Objekten mittels eines Sensors, wobei während eines Arbeitsbetriebs im Sensor eine Auswertung der dort generierten Messwerte zur Generierung eines binären Objektfeststellungssignals erfolgt. Während eines Einlernvorgangs werden Häufigkeitsverteilungen für mittels des Sensors generierte Messwerte und aus den Häufigkeitsverteilungen wird eine Gewichtungsfunktion ermittelt. Jeweils ein Wert der Gewichtungsfunktion wird einem während des auf den Einlernvorgang folgenden Arbeitsbetriebs ermittelten Messwert des Sensors zugewiesen, wobei ein erster Bereich der Gewichtungsfunktion Werte, welche einen ersten Schaltzustand des Objektfeststellungssignals entsprechen und ein zweiter Bereich der Gewichtungsfunktion Werte annimmt, welche einem zweiten Schaltzustand des Objektfeststellungssignals entsprechen.

Der Grundgedanke der Erfindung besteht darin, dass mittels der im Einlernvorgang ermittelten Gewichtungsfunktion eine genaue Zuordnung von im Arbeitsbetrieb des Sensors ermittelten Messwerten zu den beiden Schaltzuständen ermöglicht wird. Dabei ist wesentlich, dass Messwerte innerhalb des gesamten Wertebereiches zur Generierung der Schaltzustände des Objektfeststellungssignals beitragen, das heißt ein die Auflösung des Sensors begrenzender Hysteresebereich wird vermieden. Vielmehr wird allein durch den Verlauf der Gewichtungsfunktion exakt eine Tastweite definiert, welche den Wertebereich der Messwerte in einen ersten und zweiten Schaltzustand unterteilt.

Ein wesentlicher Vorteil der Erfindung besteht darin, dass die Tastweite nicht als Parameterwert eingelernt werden muss. Vielmehr wird diese Tastweite aus den während des Einlernvorgangs ermittelten Messwerten des Sensors selbsttätig abgeleitet. Hierzu können in mehreren Einzelmessungen verschiedene Objekte, die unterschiedlichen Schaltzuständen zugeordnet werden sollen, vermessen werden, wobei dann aus den hierbei ermittelten Häufigkeitsverteilungen die Gewichtungsfunktion abgeleitet wird. In einer besonders vorteilhaften Ausführungsform wird während des Einlernvorgangs eine Vermessung einer komplexen Objektszene durchgeführt, beispielsweise dadurch, dass unterschiedliche Objekte am Sensor vorbeibewegt werden. Aus den daraus ermittelten Häufigkeitsverteilungen der Messwerte, insbesondere aus den Maxima dieser Häufigkeitsverteilungen sowie der Breiten und Steigungen von Häufigkeitsverteilungen, wird dann die Gewichtungsfunktion und daraus folgend die Tastweite abgeleitet. Der so ausgebildete Sensor bildet ein selbstlernendes System, welches in Abhängigkeit der beim Einlernvorgang registrierten Messwerte seine Funktionsparameter für die Objektdetektion während des Arbeitsbetriebs selbständig einlernt.

Die im Einlernvorgang bestimmte Gewichtungsfunktion unterscheidet sich generell von einem Schwellwert, der zwei Bereiche digital voneinander trennt. Vielmehr stellt die Gewichtungsfunktion eine kontinuierliche Funktion dar, die durch die Auswertung der Häufigkeitsverteilung im Einlernvorgang die Zuverlässigkeit der Messwerte berücksichtigt. Generell trägt die Gewichtungsfunktion dem Umstand Rechnung, dass Messwerte, die dicht an der Tastweite liegen, aufgrund von Messwertschwankungen weniger zuverlässig sind, als Messwerte, die weiter entfernt zur Tastweite liegen. Dementsprechend nimmt die Gewichtungsfunktion im Bereich der Tastweite betragsmäßig kleinere Werte an, als in zur Tastweite entfernten Bereichen, so dass Messwerte im Bereich der Tastweite weniger stark zur Generierung des Objektfeststellungssignals beitragen als Messwerte, die weit entfernt zur Tastweite liegen. Durch eine Auswertung mehrerer, insbesondere einer vorgegebenen Anzahl von Messwerten mittels der im Einlernvorgang bestimmten Gewichtungsfunktion, wird dann das binäre Objektfeststellungssignal generiert. Da zu diesem Objektfeststellungssignal generell alle Messwerte innerhalb des gesamten Messwertbereichs beitragen, wird eine hohe Messgenauigkeit bei der Generierung des Objektfeststellungssignals erhalten.

Besonders vorteilhaft bildet die Gewichtungsfunktion eine Rampenfunktion mit den asymtotischen Werten +1 und -1, wobei im Grenzbereich, in welchem die beiden Bereiche aneinander grenzen, ein linearer Übergang zwischen den asymtotischen Werten erfolgt.

Dabei tragen im Arbeitsbetrieb des Sensors ermittelte Messwerte, die positiven Werten der Gewichtungsfunktion zugewiesen werden zu einem ersten Schaltzustand des Objektfeststellungssignals bei, während Messwerte, die negativen Werten der Gewichtungsfunktion zugewiesen werden, zum zweiten Schaltzustand des Objektfeststellungssignals beitragen.

Die Messwerte, welchen die Werte +1 oder -1 zugewiesen werden, tragen am stärksten zur Ausbildung des ersten beziehungsweise zweiten Schaltzustands bei. Der Nulldurchgang der Gewichtungsfunktion repräsentiert die Tastweite des Systems. Die Messwerte, die dicht benachbart zur Tastweite sind, werden für die Ausbildung des ersten und zweiten Schaltzustands weniger stark herangezogen, da in diesem Bereich die Gewichtungsfunktion kleine Werte annimmt.

Diese oder eine entsprechend ausgebildete Gewichtungsfunktion wird besonders vorteilhaft mit einer Mehrfachauswertung von Messwerten in Form eines Zählverfahrens ausgewertet.

Besonders vorteilhaft dient das Verfahren zur Generierung des Objektfeststellungssignals. Während des Arbeitsbetriebs des Sensors werden mehrere Messwerte herangezogen. Die Werte der Gewichtungsfunktion, welche den Messwerten des Sensors zugewiesen werden, bilden Zählwerte. Die einzelnen Zählwerte werden addiert und die Summe der Zählwerte mit wenigstens einem Schwellwert bewertet. Das Objektfeststellungssignal nimmt den ersten Schaltzustand ein, wenn die Summe der Zählwerte oberhalb des Schwellwerts liegt und einen zweiten Schaltzustand, wenn die Summe der Zählwerte unterhalb des Schwellwerts liegt.

Insbesondere werden die Zählwerte mit zwei Schwellwerten werden bewertet, wobei das Objektfeststellungssignal den ersten Schaltzustand einnimmt, wenn die Summe der Zählwerte oberhalb des oberen Schwellwerts liegt. Das Objektfeststellungssignal nimmt den zweiten Schaltzustand ein, wenn die Summe der Zählwerte unterhalb des unteren Schwellwerts liegt.

Liegen die bei einer Objektdetektion erhaltenen Messwerte in einem Bereich, in welchem diese betragsmäßig hohen Werte der Gewichtungsfunktion zugewiesen werden, so bedeutet dies, dass diese eindeutig einem Schaltzustand des Objektfeststellungssignals zugeordnet werden können. Bei dem Zählverfahren wird dies dadurch berücksichtigt, dass bei der Summenbildung bereits wenige Zählwerte ausreichen, dass der korrespondierende Schwellwert erreicht wird, das heißt ein Wechsel des Schaltzustands des Objektfeststellungssignals wird sehr schnell erhalten. Liegen dagegen die bei einer Objektdetektion erhaltenen Messwerte dicht an der Tastweite, so werden diese betragsmäßig kleinen Werte der Gewichtungsfunktion zugewiesen. Bei der Auswertung mittels des Zählverfahrens ist dann eine große Anzahl von Messwerten erforderlich, dass die Summe der Zählwerte einen der Schwellwerte erreicht, das heißt es ist eine große Anzahl von Messwerten erforderlich, damit ein Wechsel des Schaltzustands erhalten wird. Somit werden die Messwerte mittels der Gewichtungsfunktion hinsichtlich ihrer Zuverlässigkeit gewichtet. Je zuverlässiger ein Messwert ist, desto größer der betragsmäßige Wert der Gewichtungsfunktion, welcher diesem Messwert zugewiesen wird, desto größer sein Beitrag zur Generierung eines bestimmten Schaltzustands des Objektfeststellungssignals. Dadurch wird eine besonders fehlersichere und zuverlässige Objektdetektion ermöglicht.

Generell kann das erfindungsgemäße Verfahren dahingehend variiert werden, dass in dem Einlernvorgang anstelle einer Gewichtungsfunktion zwei separate Gewichtungsfunktionen ermittelt werden, wobei die Werte einer ersten Gewichtungsfunktion einem ersten Schaltzustand und die Werte der zweiten Gewichtungsfunktion dem zweiten Schaltzustand des Objektfeststellungssignals entsprechen. Dem im Arbeitsbetrieb ermittelten Messwert wird jeweils ein Wert der ersten Gewichtungsfunktion und ein Wert der zweiten Gewichtungsfunktion zugewiesen und zur Bestimmung des Schaltzustands des Objektfeststellungssignals wird jeweils die Differenz der zugewiesenen Werte der beiden Gewichtungsfunktionen bestimmt.

Weiterhin kann das erfindungsgemäße Verfahren derart erweitert werden, dass für unterschiedliche Arten von Messwerten separate Gewichtungsfunktionen in einem Einlernvorgang bestimmt werden. Diese Gewichtungsfunktionen werden zur Generierung des Objektfeststellungssignals in dem nachfolgenden Arbeitsbetrieb herangezogen.

Hierdurch kann die Zuverlässigkeit der Objektdetektion weiter erhöht werden.

Das erfindungsgemäße Verfahren kann für Sensoren unterschiedlicher Art eingesetzt werden, insbesondere für optische oder kapazitive Sensoren oder auch Ultraschallsensoren. Je nach Ausbildung des Sensors können die Messwerte von Intensitätswerten, Distanzwerten, Kontrast- oder Farbinformationen oder dergleichen gebildet sein.

Die Erfindung wird im Folgenden anhand der Zeichnungen erläutert. Es zeigen:
- Figur 1:: Blockschaltbild eines optischen Sensors.
- Figur 2:: Häufigkeitsverteilung von Distanzwerten, welche bei einem Einlernvorgang mittels des optischen Sensors gemäß Figur 1 ermittelt werden.
- Figur 3:: Normierte Verteilungsfunktion, welche aus den Häufigkeitsverteilungen gemäß Figur 2 abgeleitet wurde.
- Figur 4:: Gewichtungsfunktion, die aus der normierten Verteilungsfunktion gemäß Figur 3 abgeleitet wurde.
- Figur 5:: Zeitabhängiger Zählerstand für ein Auswerteverfahren zur Objektdetektion mittels des optischen Sensors gemäß Figur 1 sowie Zeitverlauf des daraus abgeleiteten Objektfeststellungssignals.
- Figur 6:: Anordnung eines optischen Sensors zur Detektion von auf einem Transportband geförderten Objekten.
- Figur 7:: Häufigkeitsverteilung von Distanzwerten, welche in einem Einlernvorgang für den optischen Sensor gemäß Figur 6 ermittelt wurden.
- Figur 8:: Normierte Verteilungsfunktion, welche aus den Häufigkeitsverteilungen gemäß Figur 7 abgleitet wurde.
- Figur 9:: Erstes Beispiel zweier aus der normierten Verteilungsfunktion gemäß Figur 8 abgeleiteter Gewichtungsfunktionen.

- Figur 10:: Zweites Beispiel zweier aus der normierten Verteilungsfunktion gemäß Figur 8 abgeleiteter Gewichtungsfunktionen.
- Figur 11:: Häufigkeitsverteilung von Intensitätsmesswerten für den optischen Sensor gemäß Figur 7.

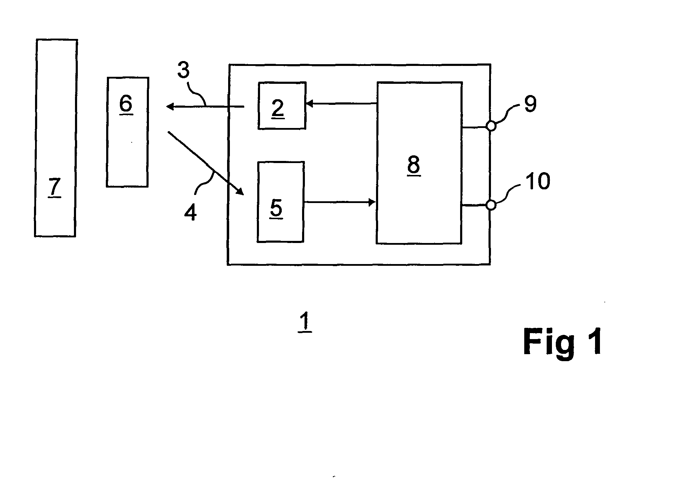

Figur 1 zeigt schematisch den Aufbau eines optischen Sensors 1. Der optische Sensor 1 umfasst einen Sender 2, welcher Sendelichtstrahlen 3 emittiert. Zudem ist ein Empfangslichtstrahlen 4 empfangender Empfänger 5 vorgesehen. Die Sendelichtstrahlen 3 werden von einem zu detektierenden Objekt 6 oder vor einem Hintergrund 7, vor welchem das Objekt 6 platziert werden kann, als Empfangslichtstrahlen 4 zum Empfänger 5 zurück reflektiert. Die Ansteuerung des Senders 2 sowie die Auswertung der Empfangssignale des Empfängers 5 erfolgt in einer Auswerteeinheit 8, welche von einem Mikroprozessor oder dergleichen gebildet sein kann. In Abhängigkeit der Empfangssignale wird in der Auswerteeinheit 8 ein Objektfeststellungssignal generiert, welches über einen Schaltausgang 9 ausgegeben wird. Der optische Sensor 1 kann über eine Schnittstelle 10 parametriert werden. Zudem kann über diese ein Einlernvorgang ausgelöst werden. Der optische Sensor 1 ist im vorliegenden Fall als Distanzsensor ausgebildet. Die Distanzmessung kann beispielsweise nach dem Triangulationsprinzip erfolgen, wobei hierzu ein ortsauflösender Empfänger 5 verwendet wird.

In dem optischen Sensor 1 stehen als auswertbare Messwerte somit Distanzwerte sowie Intensitätsmesswerte, das heißt Amplitudenwerte der Empfangssignale zur Verfügung. Anhand der Messwerte wird im Arbeitsbetrieb des optischen Sensors 1 ein binäres Objektfeststellungssignal generiert, dessen Schaltzustände angeben, ob ein Objekt 6 oder nur der Hintergrund 7 detektiert wurde.

Vor Aufnahme des Arbeitsbetriebs wird ein Einlernvorgang durchgeführt, der über einen Eingabebefehl über die Schnittstelle des optischen Sensors 1 ausgelöst wird. Im vorliegenden Ausführungsbeispiel wird ein zweistufiger Einlemvorgang durchgeführt, wobei jede Stufe des Einlernvorgangs mit einem separaten Eingabebefehl über die Schnittstelle 10 ausgelöst wird.

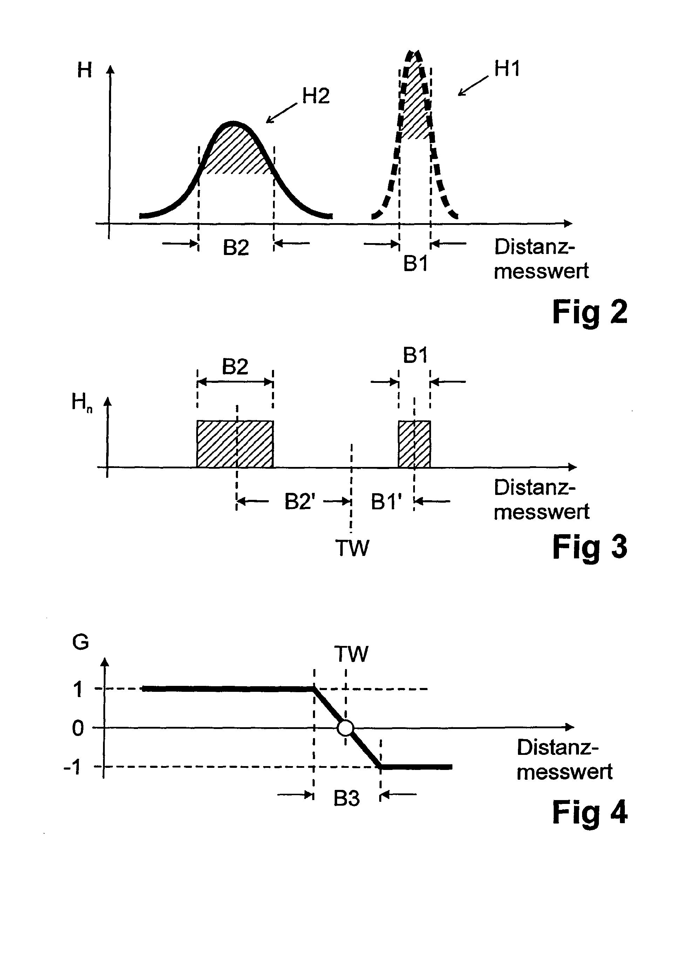

In der ersten Stufe des Einlernvorgangs wird mit dem optischen Sensor 1 allein der Hintergrund 7 vermessen. Dabei werden für eine vorgegebene Zeit die hierbei am Empfänger 5 registrierten Distanzmesswerte ausgewertet, indem eine Häufigkeitsverteilung H1 für die registrierten Distanzmesswerte ermittelt wird. In der zweiten Stufe des Einlernvorgangs wird ein Objekt 6 vor dem Hintergrund 7 platziert und dann das Objekt 6 mittels des optischen Sensors 1 erfasst. Für die dabei ermittelten Distanzwerte wird die Häufigkeitsverteilung H2 ermittelt. Die Häufigkeitsverteilungen H1 und H2 sind in Figur 2 dargestellt.

Aus den Häufigkeitsverteilungen H1 und H2 werden die normierten Häufigkeitsverteilungen, die in Figur 3 dargestellt sind, abgeleitet. Hierzu werden die Lagen und Breiten B1, B2 der Häufigkeitsverteilungen H1 und H2 herangezogen. Die Breiten B1, B2 der Häufigkeitsverteilungen H1 und H2 sind im vorliegenden Fall dadurch definiert, dass für jede Häufigkeitsverteilung H1 und H2 die Breite bei halber Höhe des Maximalwerts der jeweiligen Häufigkeitsverteilung H1, H2 bestimmt wird. Daraus ergeben sich die rechteckförmigen normierten Häufigkeitsverteilungen Hₙ der Breite B1 und B2 wie in Figur 3 dargestellt. Anhand dieser normierten Häufigkeitsverteilung Hₙ wird die Lage einer Tastweite TW bestimmt. Dabei liegt die Tastweite TW jeweils von einem Abstand B1' beziehungsweise B2' zum Zentrum einer der beiden normierten Häufigkeitsverteilungen Hₙ, wobei die Abstände B1' und B2' im Verhältnis zu den Breiten B1 und B2 der normierten Häufigkeitsverteilungen Hₙ gewählt sind.

In einem weiteren Schritt wird unter der Verwendung der so bestimmten Tastweite TW die in Figur 4 dargestellte Gewichtungsfunktion G abgeleitet. Die Gewichtungsfunktion weist die Form einer Rampenfunktion auf, die zu geringen Distanzwerten hin den Wert +1 und zu großen Distanzwerten hin den Wert -1 aufweist. Der Nulldurchgang der Gewichtungsfunktion G liegt in der Tastweite TW. Um die Tastweite TW herum liegt der Übergangsbereich der Gewichtungsfunktion, in welcher die Werte sich linear vom ersten asymtotischen Wert +1 bis zum zweiten asymtotischen Wert -1 ändern. Die Breite B3 des Übergangsbereichs wird abhängig vom Abstand der normierten Häufigkeitsverteilung Hₙ gewählt. Vorzugsweise beträgt die Breite B3 des Übergangsbereichs einen bestimmten Bruchteil vom Abstand zwischen den normierten Häufigkeitsverteilungen Hₙ.

Mit der Bestimmung der Gewichtungsfunktion ist der Einlernvorgang beendet. Die im Einlernvorgang bestimmte Gewichtungsfunktion wird im nachfolgenden Arbeitsbetrieb zur Generierung des Objektfeststellungssignals bei der Objektdetektion herangezogen.

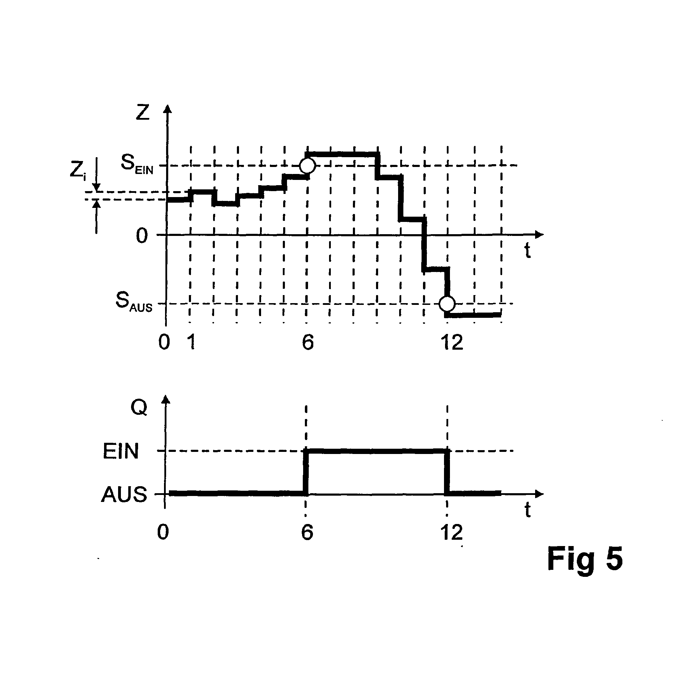

Das Auswerteverfahren zur Generierung des Objektfeststellungssignals ist in den Zeitdiagrammen von Figur 5 veranschaulicht. Die Objektdetektion erfolgt nach einem Zählverfahren, wobei das obere Diagramm die zeitabhängigen Zählerstände Z eines Zählers in der Auswerteeinheit 8 zeigt und das untere Diagramm das daraus abgeleitete binäre Objektfeststellungssignal, das heißt das Schaltsignal Q zeigt. Dabei ist im unteren Diagramm mit "EIN" der Schaltzustand "Objekt erkannt" und mit "AUS" der Schaltzustand "kein Objekt", das heißt "Hintergrund erkannt" bezeichnet.

Zur Durchführung des Zählverfahrens wird die Gewichtungsfunktion G gemäß Figur 4 verwendet. Hierzu wird bei der Objektdetektion jedem ermittelten Distanzwert der entsprechende Wert der Gewichtungsfunktion G gemäß Figur 4 zugeordnet, wobei jeder dieser einem Distanzmesswert entsprechenden Werte der Gewichtungsfunktion einen Zählwert Zᵢ für das in Figur 5 veranschaulichte Zählverfahren bildet. In der Auswerteeinheit 8 werden dabei die den aktuellen Distanzmesswerten entsprechenden Zählwert Zᵢ fortlaufend aufsummiert. Der aktuelle Zählerstand wird dabei mit zwei Schwellwerten S_{EIN} und S_{AUS} verglichen, wobei S_{EIN} > S_{AUS}. Übersteigt der Zählerstand den Schwellwert S_{EIN}, so wechselt das Schaltsignal Q, wie aus Figur 5 ersichtlich, in den Schaltzustand "EIN". Sobald der Zählerstand den Schwellwert unterschreitet, wechselt das Schaltsignal, wie aus Figur 5 ersichtlich, in den Schaltzustand "AUS".

Da jedem bei der Objektdetektion ermittelten Distanzmesswert ein Wert der Gewichtungsfunktion zugewiesen wird und dieser als Zählwert im Zählerverfahren berücksichtigt wird, tragen alle ermittelten Distanzmesswerte zur Generierung des Objektfeststellungssignals bei, das heißt es existiert kein Hysteresebereich, das heißt kein Totbereich von Messwerten, die nicht zu einer Änderung des Objektfeststellungssignals beitragen können.

Durch die spezifische Ausbildung der Gewichtungsfunktion G gemäß Figur 4 ist zudem gewährleistet, dass zuverlässige Messwerte, das heißt Messwerte die sicher einem Schaltzustand zugeordnet werden können, beim Zählverfahren stärker berücksichtigt werden und damit mehr zur Generierung des Objektfeststellungssignals beitragen als nicht zuverlässige Messwerte. Im Bereich der Tastweite TW sind die Werte der Gewichtungsfunktion nämlich am kleinsten. In diesem Bereich kann aufgrund von Messwertrauschen ein Messwert nicht sicher einem Schaltzustand zugeordnet werden. Je weiter die Distanzmesswerte von der Tastweite TW entfernt sind, desto sicherer können diese einem Schaltzustand zugeordnet werden. So können die Distanzmesswerte, denen der Wert +1 der Gewichtungsfunktion G zugeordnet wird, sehr sicher dem Schaltzustand "EIN" zugeordnet werden. Ebenso können die Distanzmesswerte, denen der Wert -1 der Gewichtungsfunktion G zugeordnet wird, sehr sicher dem Schaltzustand "AUS" zugeordnet werden. Je geringer der betragsmäßige Wert der Gewichtungsfunktion G, desto unzuverlässiger kann der zugehörige Distanzmesswert einem Schalzustand des Objektfeststellungssignals zugeordnet werden.

Da die Gewichtungsfunktion die Zuverlässigkeit der Distanzmesswerte berücksichtigt, führt dies im Zählverfahren gemäß Figur 5 dazu, dass für eine Schaltzustandsänderung nur eine kleine Zahl zuverlässiger, andererseits jedoch eine große Zahl unzuverlässiger Distanzmesswerte benötigt wird. Dies führt zu einer besonders zuverlässigen und fehlersicheren Generierung des Objektfeststellungssignals. Die Zeitdiagramme in Figur 5 veranschaulichen dies. Um einen Übergang in den Schaltzustand "EIN" zu erhalten, sind insgesamt sechs Zählstufen nötig, da die hierbei registrierten Distanzmesswerte unzuverlässig sind, das heißt dicht an der TW liegen, so dass die Werte der Gewichtungsfunktion G und damit die einzelnen Zählwerte Zᵢ klein sind.

Dagegen werden für den Übergang vom Schaltzustand "EIN" in den Schaltzustand "AUS" nur vier Zählerschritte benötigt, da dort die Distanzmesswerte zuverlässiger und damit die einzelnen Zählwerte Zᵢ größer sind.

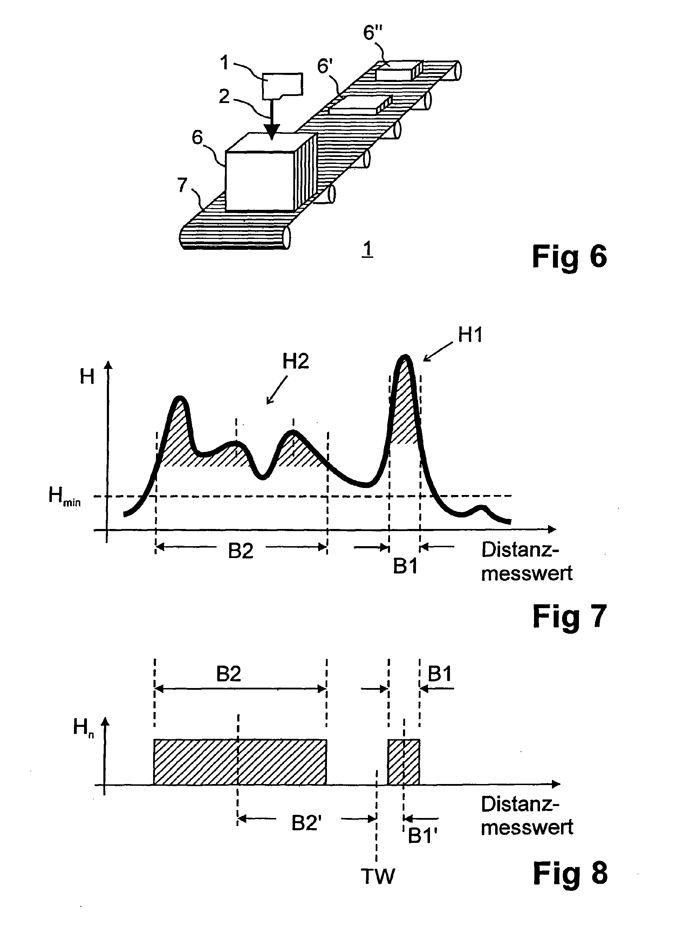

Figur 6 zeigt eine Anordnung des optischen Sensors 1 gemäß Figur 1 oberhalb eines einen Hintergrund bildenden Transportbands. Mit dem optischen Sensor 1 sollen Objekte 6, 6', 6" auf dem Transportband erkannt, das heißt von dem Hintergrund unterschieden werden.

In einem Einlernvorgang werden die im Abstand zueinander liegenden Objekte auf dem Transportband gefördert und so am optischen Sensor 1 vorbeibewegt.
Die dabei ermittelte Verteilung von Distanzmesswerten ist in Figur 7 dargestellt. Der bei den größten Distanzmesswerten liegende Peak der Verteilung wird dem Hintergrund 7 zugeordnet und bildet die Häufigkeitsverteilung H1. Der restliche Verlauf der Verteilung wird, wie aus Figur 7 ersichtlich, der Häufigkeitsverteilung H2 für detektierte Objekte 6 zugeordnet.

Für die Häufigkeitsverteilungen H1 und H2 werden dann analog zur Ausführungsform gemäß Figur 2 die Breiten B1 und B2 bestimmt. Dann werden, analog zu Figur 3, aus den Häufigkeitsverteilungen H1 und H2 die normierten Häufigkeitsverteilungen Hₙ gebildet (Figur 8).

Aus diesen normierten Häufigkeitsverteilungen Hₙ kann dann eine der Gewichtungsfunktionen G gemäß Figur 4 entsprechende Gewichtungsfunktion G abgeleitet werden, wodurch der Einlernvorgang beendet wird. Die anschließende Objektdetektion zur Generierung des Objektfeststellungssignals erfolgt dann wieder gemäß dem Auswerteverfahren gemäß Figur 5.

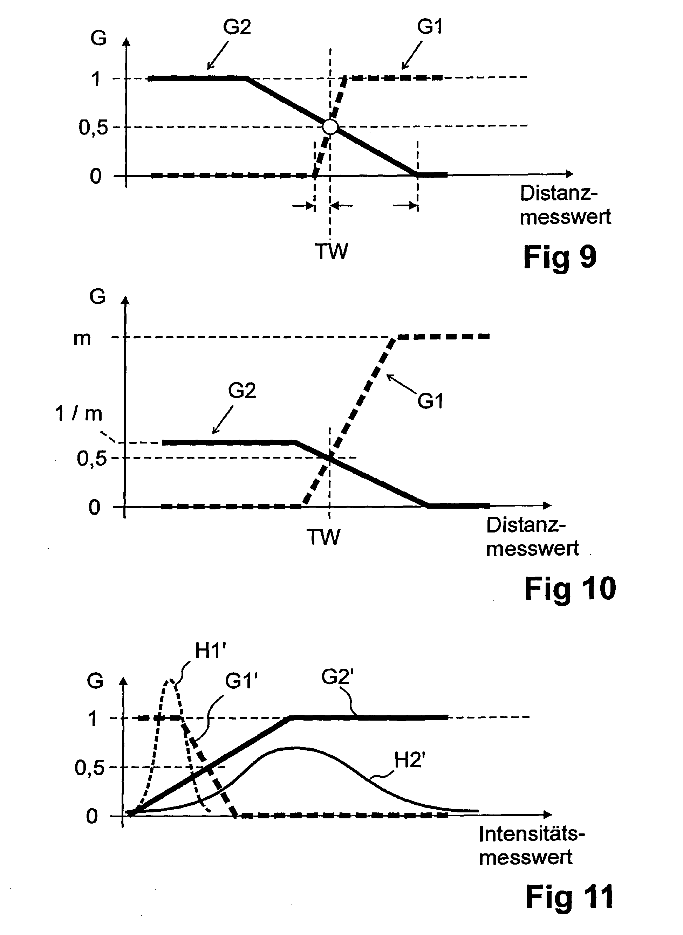

Alternativ können wie in Figur 9 dargestellt, für die Objektdetektion (das heißt die Häufigkeitsverteilung H2) und für die Hintergrunddetektion (das heißt für die Häufigkeitsverteilung H1) getrennte Gewichtungsfunktionen G2 beziehungsweise G1 abgeleitet werden. Die beiden Gewichtungsfunktionen gemäß Figur 9 sind auf die asymtotischen Werte 0 und 1 normiert und schneiden sich in der Tastweite TW. Die Breiten der Übergangsbereiche der Gewichtungsfunktionen G1 und G2 sind an die Breiten B1, B2 der zugehörigen Häufigkeitsverteilungen H1, H2 angepasst.

Zur Objektdetektion wird dann jedem ermittelten Distanzmesswert sowohl der entsprechende Wert der Gewichtungsfunktion G1 als auch der Wert der Gewichtungsfunktion G2 zugeordnet. Danach wird die Differenz dieser Werte gebildet. Diese Differenz bildet dann den Zählwert Zᵢ, der im Zählverfahren gemäß Figur 5 zur Generierung des Objektfeststellungssignals verwendet wird.

Figur 10 zeigt eine Variante der Gewichtungsfunktionen G1 und G2 derart, dass diese anders als die Gewichtungsfunktionen G1 und G2 auf unterschiedliche Werte normiert sind. Dabei wird die Gewichtungsfunktion G1 auf den Wert m und die Gewichtungsfunktion G2 auf den Wert 1/m normiert, wobei m² = B2/B1. Durch diese Normierung kann die Gewichtung mit den Gewichtungsfunktionen noch stärker an die spezifischen Häufigkeitsverteilungen H1, H2 angepasst werden.

Figur 11 zeigt eine Erweiterung der Objektdetektion gemäß Figur 10 dahingehend, dass zusätzlich zu Distanzmesswerten auch Intensitätsmesswerte des optischen Sensors 1 zur Generierung des Objektfeststellungssignals herangezogen werden. In Figur 11 sind dabei die Häufigkeitsverteilungen H1' und H2' von Intensitätsmesswerten dargestellt, die bei dem Einlernvorgang gemäß Figur 10 zusätzlich zu den Distanzmesswerten bei der Vermessung des Objekts 6 beziehungsweise des Hintergrunds 7 erhalten werden.

Durch die zusätzliche Auswertung von Intensitätsmesswerten, die analog zur Auswertung der Distanzmesswerte erfolgen kann, wird die Detektionssicherheit des optischen Sensors 1 weiter erhöht.

Besonders vorteilhaft können die Auswertungen der Distanz- und Intensitätsmessungen derart verknüpft werden, dass bei der aktuellen Objektdetektion sowohl für den aktuellen Distanzmesswert als auch für den Intensitätsmesswert jeweils über die zugeordneten Gewichtungsfunktionen G1, G2 beziehungsweise G1', G2' ein Zählwert Zᵢ beziehungsweise Z_{i'} abgeleitet wird. Dann kann beispielsweise das Produkt der Zählwerte Zᵢ und Zᵢ, gebildet werden. Dieses Produkt wird dann in dem Zählverfahren gemäß Figur 5 zur Generierung des Objektfeststellungssignals verwendet.

### Bezugszeichenliste

- (1): Optischer Sensor
- (2): Sender
- (3): Sendelichtstrahlen
- (4): Empfangslichtstrahlen
- (5): Empfänger
- (6): Objekt
- (7): Hintergrund
- (8): Auswerteeinheit
- (9): Schaltausgang
- (10): Schnittstelle

## Patentansprüche

1. Verfahren zur Detektion von Objekten mittels eines Sensors, wobei während eines Arbeitsbetriebs im Sensor eine Auswertung der dort generierten Messwerte zur Generierung eines binären Objektfeststellungssignals erfolgt, **dadurch gekennzeichnet, dass** während eines Einlernvorgangs Häufigkeitsverteilungen für mittels des Sensors generierte Messwerte ermittelt werden, und dass aus den Häufigkeitsverteilungen eine Gewichtungsfunktion ermittelt wird, wobei jeweils ein Wert der Gewichtungsfunktion einem während des auf den Einlernvorgang folgenden Arbeitsbetriebs ermittelten Messwert des Sensors zugewiesen wird, wobei ein erster Bereich der Gewichtungsfunktion Werte annimmt, welche einen ersten Schaltzustand des Objektfeststellungssignals entsprechen und ein zweiter Bereich der Gewichtungsfunktion Werte annimmt, welche einem zweiten Schaltzustand des Objektfeststellungssignals entsprechen.

2. Verfahren nach Anspruch 1, **dadurch gekennzeichnet, dass** während des Einlernvorgangs eine erste Häufigkeitsverteilung dem zweiten Schaltzustand des Objektfeststellungssignals zugeordnet wird.

3. Verfahren nach Anspruch 2, **dadurch gekennzeichnet, dass** zur Bestimmung der beiden, den unterschiedlichen Schaltzuständen zugeordneten Häufigkeitsverteilungen zwei getrennte Messungen durchgeführt werden, bei welchen jeweils ein definiertes Objekt (6) mit dem Sensor detektiert wird.

4. Verfahren nach Anspruch 2, **dadurch gekennzeichnet, dass** zur Bestimmung der beiden, den unterschiedlichen Schaltzuständen zugeordneten Häufigkeitsverteilungen während einer Messung unterschiedliche Objekte (6) detektiert werden, wobei aus den hierbei erhaltenen Häufigkeitsverteilungen die beiden den Schaltzuständen des Objektfeststellungssignals zuzuordnenden Häufigkeitsverteilungen extrahiert werden.

5. Verfahren nach einem der Ansprüche 1 bis 4, **dadurch gekennzeichnet, dass** die Werte der Gewichtungsfunktion in dem ersten Bereich positiv und in dem zweiten Bereich negativ sind.

6. Verfahren nach Anspruch 5, **dadurch gekennzeichnet, dass** die Gewichtungsfunktion eine Rampenfunktion mit den asymtotischen Werten +1 und -1 bildet, wobei im Grenzbereich, in welchem die beiden Bereiche aneinander grenzen, ein linearer Übergang zwischen den asymtotischen Werten erfolgt.

7. Verfahren nach einem der Ansprüche 1 bis 6, **dadurch gekennzeichnet, dass** zur Generierung des Objektfeststellungssignals während des Arbeitsbetriebs des Sensors mehrere Messwerte herangezogen werden, wobei die Werte der Gewichtungsfunktion, welche den Messwerten des Sensors zugewiesen werden, Zählwerte bilden, und wobei die einzelnen Zählwerte addiert werden und die Summe der Zählwerte mit wenigstens einem Schwellwert bewertet werden, wobei das Objektfeststellungssignal den ersten Schaltzustand einnimmt, wenn die Summe der Zählwerte oberhalb des Schwellwerts liegt und einen zweiten Schaltzustand einnimmt, wenn die Summe der Zählwerte unterhalb des Schwellwerts liegt.

8. Verfahren nach Anspruch 7, **dadurch gekennzeichnet, dass** die Zählwerte mit zwei Schwellwerten bewertet werden, wobei das Objektfeststellungssignal den ersten Schaltzustand einnimmt, wenn die Summe der Zählwerte oberhalb des oberen Schwellwerts liegt, und wobei das Objektfeststellungssignal den zweiten Schaltzustand einnimmt, wenn die Summe der Zählwerte unterhalb des unteren Schwellwerts liegt.

9. Verfahren nach einem der Ansprüche 1 bis 8, **dadurch gekennzeichnet, dass** in dem Einlernvorgang anstelle einer Gewichtungsfunktion zwei separate Gewichtungsfunktionen ermittelt werden, wobei die Werte einer ersten Gewichtungsfunktion einem ersten Schaltzustand und die Werte der zweiten Gewichtungsfunktion dem zweiten Schaltzustand des Objektfeststellungssignals entsprechen, und wobei dem im Arbeitsbetrieb ermittelten Messwert jeweils ein Wert der ersten Gewichtungsfunktion und ein Wert der zweiten Gewichtungsfunktion zugewiesen wird und zur Bestimmung des Schaltzustands des Objektfeststellungssignals jeweils die Differenz der zugewiesenen Werte der beiden Gewichtungsfunktionen bestimmt wird.

10. Verfahren nach einem der Ansprüche 1 bis 9, **dadurch gekennzeichnet, dass** für unterschiedliche Arten von Messwerten separate Gewichtungsfunktionen in einem Einlernvorgang bestimmt werden, wobei diese Gewichtungsfunktionen zur Generierung des Objektfeststellungssignals in dem nachfolgenden Arbeitsbetrieb herangezogen werden.

11. Verfahren nach einem der Ansprüche 1 bis 10, **dadurch gekennzeichnet, dass** zur Objektdetektion ein optischer Sensor (1) verwendet wird.

12. Verfahren nach einem der Ansprüche 1 bis 10, **dadurch gekennzeichnet, dass** zur Objektdetektion ein Ultraschallsensor oder ein kapazitiver Sensor verwendet wird.

13. Verfahren nach einem der Ansprüche 11 oder 12, **dadurch gekennzeichnet, dass** als Messwerte Intensitätswerte ausgewertet werden.

14. Verfahren nach einem der Ansprüche 11 oder 12, **dadurch gekennzeichnet, dass** als Messwerte Distanzwerte ausgewertet werden.

15. Verfahren nach Anspruch 11, **dadurch gekennzeichnet, dass** als Messwerte Kontrast- oder Farbinformationen ausgewertet werden.
